# EUROPEAN PATENT APPLICATION

(11) **EP 1 189 403 A1**
(43) Date of publication of application: **20.03.2002**
(21) Application number: 00120081.5
(22) Date of filing: 15.09.2000
(51) Int. Cl.: H04L 29/06

(54) **Method for exchanging capability information in a telecommunication system**

(71) Applicant: TELEFONAKTIEBOLAGET LM ERICSSON (publ), 126 25 Stockholm (SE)
(72) Inventor: Hameleers, Heino, 6471VN Kerkrade (NL); Hundscheidt, Frank, 6463BK Kerkrade (NL)
(74) Representative: Mohsler, Gabriele

(57) **Abstract**

The invention relates to a method and an apparatus for exchanging capability information in a telecommunication system between a server and a peripheral unit. In the method variable capability information, i.e. information that is related to a user equipment in particular for example free memory space, free processor capacity, available operating system and available software, are provided as well as capability information as known by a person skilled in the art. The invention further relates to a method using said information for making a distribution decision.

## Description

### Field of invention

The invention relates to a method for exchanging capability information with a peripheral unit in a telecommunication system. The method relates especially to exchanging variable capability information. It further relates to using said methods for making a distribution decision.

### Description of prior at

Telecommunication systems nowadays offer more and more sophisticated services. Multimedia applications like games, video sequences etc., increase the traffic within said systems. Additionally, the demand of processor performance raises sharply.

One group of services that is most demanding is the group of multi-user real-time applications. The provision of such services requires processor capacity to a high extent.

A solution for that is either to run such services on a unit providing sufficient capacity, or to run said service on a plurality of units. A multimedia service in a telecommunication system for instance, can be run on one server or several servers or user equipment that use said service.

To distribute the service to servers or user equipment, it has to be known beforehand, whether the units the service is to be distributed to are capable of running it.

The ITU H.245 standard, released march 1996, describes a method how to exchange capability information between two entities in a telecommunication system. An entity is a requesting unit or a peripheral unit. According to the method a first telecommunication entity sends its capabilities to a second telecommunication entity, the second telecommunication entity returning an acknowledgement. A capability exchange could be performed in the opposite direction, also. That is, a second telecommunication entity sending a capability request to a first telecommunication entity, the first telecommunication entity returning its capability information. A method working on either direction is demanded in the GSM 02.57 standard, released in July 1999.

### Summary of the invention

It is a shortcoming of the prior art that none of the standards provides a method to exchange information about current capabilities of a telecommunication entity.

Therefore it is one object of the invention to provide a method and a device for the exchange of information about current capabilities of a telecommunication entity.

It is a further object of the invention to provide a method, how said method for the exchange of current capability information can be used for taking a distribution decision.

Another object of the invention is a telecommunication system, controlled according to said methods.

The invention provides a method to exchange information about current capabilities of a telecommunication entity. A first telecommunication entity, in the following called requesting unit, and a second telecommunication entity, in the following called peripheral unit, exchange information about capabilities. Said exchange can be performed in two ways. The first way is the requesting unit sends a request to the peripheral unit and the peripheral unit returns the requested information. The second way is the peripheral unit sends information about its capabilities to the requesting unit and receives an acknowledgement in return. In both cases, information about the current capabilities of the peripheral unit are included in the information exchanged between requesting unit and peripheral unit. The information about current capabilities of a peripheral unit is essential in certain cases. For example before a service is activated, it is necessary to know whether a peripheral unit is capable of running it. Therefore a peripheral unit does not only has to be capable of running the service in general, it is also necessary that the necessary resources of the peripheral unit are available at the moment.

In an embodiment of the invention, the requesting unit is a server providing a program for a service or for supporting a service. Due to the increasing modularity of software programs, said program could be divided into several portions. In a preferred embodiment of the invention, said portions are implemented as mobile software agents. Software agents are portions of software, comprising code, status and data. So-called static agents stay within a transmission entity, so-called mobile agents, being capable of running on different platforms, are sent from one entity to another. Software agents perform certain tasks and work independently. They are capable of monitoring their environment and can act accordingly and they can control other their methods.

In a further embodiment of the invention, a distribution decision unit is gathering the information about current capabilities of at least one telecommunication entity. The distribution decision unit can be implemented in any telecommunication unit or as a stand-alone device. There may also exist a plurality of distribution decision units within a telecommunication system. Said unit performs the exchange of capability information with peripheral units.

A peripheral unit is one of a user equipment, an access network node, an intermediate network node or a server network node. A user equipment is any equipment capable of accessing a telecommunication system, for example a telephone, a cellular phone, a facsimile machine, or a personal computer. An access network is a network that enables user equipment to access an intermediate network, for example a mobile telecommunications access network or a telephone network. An intermediate network is a network that connects at least two access networks, for example a mobile telecommunications core network or a computer network. A server network comprises at least one server, providing or supporting services. Checking the capabilities of a variety of peripheral units enables to take a distribution decision based on a larger base of information giving the possibility to use system resources in a way that is highly adapted to the system structure and current load situations.

The capability information exchanged between the requesting unit and the peripheral unit comprises information about currently available resources like free memory space, software, operating systems or processor capacity that is not required by other programs run on the peripheral unit. This information is important especially in cases of a distribution decision where the information whether a peripheral unit is capable of handling a program in general is not sufficient.

In an embodiment of the invention, a peripheral unit collects capability information about further peripheral units. Said peripheral unit can be for example a bandwidth broker, handling resources within at least part of a telecommunication system. By this, the time until a distribution decision is made, is reduced significantly, as a requesting unit has to contact a smaller number of peripheral units.

In a preferred embodiment of the invention, said exchange is performed by adapting existing protocols defining mechanisms for the exchange of capability information. For example the capability information messages according to the ITU H.245, GSM 03.57 or 02.57, or UMTS 23.57 protocols are adapted to comprise information about variable capabilities. This can be implemented by adding fields to existing messages or by defining further messages or a combination of both.

The method of the invention is characterised according to claim 1, a telecommunication system using the inventive method is characterised as it appears from claim 10, a distribution decision method is characterised according to claim 13 and a computer program controlling a telecommunication system entity is characterised as it appears from claim 14.

Further advantageous embodiments of the invention can be derived from the dependent claims.

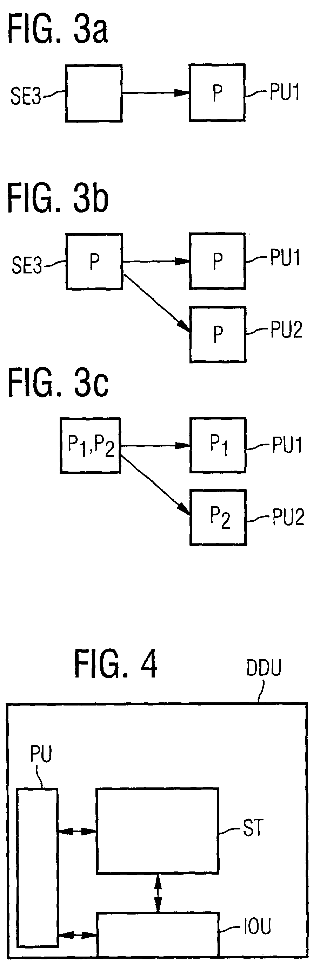

The information gained by the methods can be used to make a distribution decision. If a user equipment requests a service the software supporting or providing can be handled in different ways. The software can be run on a single telecommunication entity or it can be sent to a plurality of entities. The different mechanisms are explained in figures 3a, 3b and 3c in more detail. Independent from the question whether to run the software on a single entity or on a plurality of entities, it has to be decided on which at least one entity it will be run. A distribution decision can cover each or both of the questions.

### Brief description of the drawings

In the following, the invention is described in more detail by means of figures and examples. The following figures show:
- Fig. 1:: a schematic diagram of a capability information exchange as state of the art.
- Fig. 2:: a schematic diagram of a capability information exchange according to the invention, using a distribution decision unit.
- Fig. 3a:: a schematic diagram of a software migration.
- Fig. 3b:: a schematic diagram of a software replication.
- Fig. 3c:: a schematic diagram of a software partitioning.
- Fig. 4:: a schematic diagram of a distribution decision unit.

### Detailed description of embodiments

In the following equal reference numbers are used for equal elements.

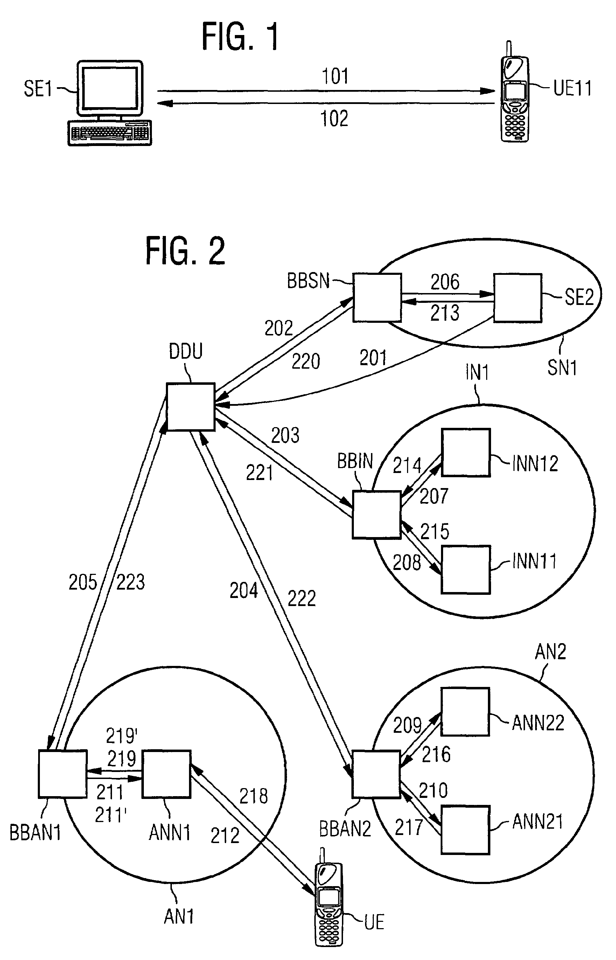

Fig. 1 depicts an exchange of capability information as state of the art. A requesting unit SE1, for example a server providing a service, sends a message 101 to a peripheral unit UE11, for example a mobile telephone. The peripheral unit UE11 sends a message 102 to the requesting unit SE1. In a first example the message 101 is a capability request message and message 102 is a capability information message.

In a second example, message 102 is a capability information message, for example an ITU H.245 TerminalCapabilitySet message and message 101 is an acknowledgement message for example an ITU H.245 TerminalCapabilitySetAck message, sent in return.

Figure 2 depicts a schematic diagram of a capability information exchange according to the invention, using a distribution decision unit. The exchange of information is performed in a telecommunication system according to the invention. Said telecommunication system is for example an UMTS (Universal Mobile Telecommunication System) with two UTRAN (UMTS Terrestrial Radio Access Networks) access networks AN1 and AN2, an IP (Internet Protocol) based intermediate network IN1 and a server SE2 connected to said intermediate network. The server is connected to a bandwidth broker BBSN, both forming the server network SN1.

The telecommunication system further comprises a distribution decision unit DDU, depicted as a stand-alone device for example a computer, and a user equipment UE. For simplicity reasons, no connections within the telecommunication system are depicted. The arrows between different telecommunication entities represent messages sent between said entities.

The server network SN1 comprises a server SE2, providing a software for a service and a bandwidth broker BBSN, collecting capability information about the server SE2 and communicating with the distribution decision unit.

The intermediate network IN1 comprises two intermediate network nodes INN11 and INN12 for setting up connections between access networks and/or the server network, and a bandwidth broker BBIN. The bandwidth broker BBIN collecting capability information about the intermediate network nodes INN11 and INN12 and communicating with the distribution decision unit DDU.

The first access network AN1 comprises an access network node ANN1 and a bandwidth broker BBAN1. The second access network AN2 comprises two access network nodes ANN21 and ANN22 and a bandwidth broker BBAN2. Each of the access network nodes ANN1, ANN21 and ANN22 providing access for user equipment to the intermediate network IN1. Each of the bandwidth broker BBAN1 and BBAN2 collects capability information about the access network nodes in the respective access network and communicates with the distribution decision unit DDU.

The user equipment UE, capable of running multimedia applications for example by using WAP (Wireless Application Protocol), requested a service from the telecommunication system. The request of services is well known to a person skilled in the art and is neither depicted nor explained in this application. The requested service is a multi-user real-time service, in the example a game. Several players play simultaneously, all players sharing the same environment and interacting with each other the game simultaneously, all players sharing the same environment and interacting with each other.

In a first message 201, the server SE2 sends an information to the distribution decision unit DDU about the required resources to run at least a portion of the software for said service. Optionally the server could include information about its variable capabilities in the message 201. At least the messages 206 and 213 are not sent in this embodiment.

In the messages 202, 203, 204, and 205 the distribution decision unit DDU requests capability information from the bandwidth broker BBSN, BBIN, BBAN1 and BBAN2. The bandwidth broker forward said request to the nodes in the respective networks in the messages 206, 207, 208, 209, 210, and 211. The access network node ANN1 currently serving the user equipment UE receives a further request 211' it forwards to the user equipment in a message 212.

In a further embodiment of the invention, the request 211' is sent from the distribution decision unit DDU directly to the access network node ANN1.

The network nodes return the capability information to the bandwidth broker in the messages 312, 214, 215, 216, 217, and 219. The user equipment returns said information to the access node ANN1 in a message 218. The access node forwards the message 218 in a message 219' to the bandwidth broker BBAN1. The bandwidth brokers forward the capability information in the messages 220, 221, 222, and 223 to the distribution decision unit DDU.

In a preferred embodiment of the invention, capability information is collected in the bandwidth broker BBSN, BBIN, BBAN1 and BBAN2 before a request 202, 203, 204, and 205, is sent by the distribution decision unit DDU.

In a further embodiment the user equipment UE sends its capability information when requesting a service. The messages 211', 212, 218, and 219' are not sent in said embodiment.

The distribution decision unit DDU processes the information and makes a decision.

First part of a distribution decision is to decide whether a program providing or supporting a service is to be migrated, replicated, partitioned or run on a server that currently contains the program.

A program is migrated, when a central, independent program takes care of all service requests and this program is moved or moves itself to different entities. In figure 3a a program P is migrated from the server SE3 to an entity PU1.

A service is replicated when it has multiple logically identical instances appearing on different entities in the telecommunication system. Figure 3b shows a program P that is replicated in the entities PU1 and PU2, each of the entities comprising a full copy of the program P.

A service is partitioned when it is provided by multiple nodes each capable of handling a subset of the requests for the service. Figure 3c shows a program P with the portions P1 and P2, the first portion P1 capable of handling a first subset of requests, the second portion P2 capable of handling a second subset of requests. The first portion P1 is sent to a first entity PU1, the second portion P2 is sent to a second entity PU2. Each of the entities PU1 and PU2 handles part of the required service.

An operator defines a policy for preferred decisions. The policy depends on the general capabilities of entities and operator preferences. Operator preferences are for example to keep the traffic load within the network low, to guarantee the availability of a service or to keep the costs of the network entities low. A partitioning of a service allows running a complex service demanding high capacity on lower cost network entities, as the performance is shared. A replication reduces the network internal traffic if the instances are closer to the clients and increases the availability. A migration reduces the network internal traffic, if the program is moved to a server closer to a client.

The distribution decision for a service depends on the policy, generally available and currently available resources, and the requirements of the service as for example certain software or operating system and memory or processing capacity.

In a second step, the distribution decision unit DDU decides which entities are used for running the program.

Figure 4 depicts a distribution decision unit DDU according to the invention. The distribution decision unit comprises a processing unit PU, processing information co-ordinating the units of the distribution decision unit and taking a distribution decision. It further comprises a storage ST, storing capability information and an input/output unit IOU communicating with units of the telecommunication system.

In a preferred embodiment of the invention, the storage stores information about a policy for distribution decisions.

The invention further relates to a computer program, stored on a computer readable medium or loaded into a memory of a computer, that controls a telecommunication system entity by using a method according to any of the claims 1 to 9. A computer readable medium is any means that stores information and can be read by an input device of a computer, for example a floppy disc, a hard disc, or an optical disc.

## Claims

1. A method for exchanging capability information from a peripheral unit in a telecommunication system including a requesting unit (SE1, DDU) and at least one peripheral unit (UE11, BBIN, BBAN1, BBAN2, BBSN, ANN1, ANN21, ANN22, INN11, INN12, SE2), the peripheral unit sending capability information to the requesting unit
**characterised, by** that
said capability information comprises information about variable capabilities.

2. A method according to claim 1, wherein a requesting unit is a server (SE1, SE2) providing a program that provides or supports service, or a distribution decision unit (DDU).

3. A method according to claim 1 or 2, wherein a peripheral unit is one out of a user equipment, an access network node, an intermediate network node, or a server network node.

4. A method according to claim 1, 2 or 3, wherein variable capability information is information about at least one of free processor capacity, available software, available operating systems or free memory space of a peripheral unit.

5. A method according to any of the claims 1 to 4, wherein the peripheral unit (BBIN, BBAN1, BBAN2, BBSN) communicates with at least one further peripheral unit (ANN1, ANN21, ANN22, INN11, INN12, SE2) and sends capability information about said at least one further peripheral unit to the requesting unit (DDU).

6. A method according to any of the claims 1 to 5, wherein the exchange of capability information is performed according to an extended version of one of an ITU H.245, GSM 02.57, GSM 03.57 or 3G UMTS 23.57 protocol.

7. A method according to any of the claims 1 to 6 used for getting information for making a distribution decision for a program, providing or supporting a service within the telecommunication system, the distribution decision being based on said information.

8. A method according to claim 7, wherein a distribution decision comprises a decision whether said program shall be partitioned, replicated or migrated.

9. A method according to claim 7 or 8, wherein a distribution decision comprises a decision in which at least one unit of the telecommunication system the program or parts of the program shall be performed.

10. A telecommunication system, comprising at least one telecommunication network comprising a server, a user equipment and infrastructure to connect them to each other, being controlled by using a method according to any of the claims 1 to 9.

11. A telecommunication system, according to claim 10, comprising:
- at least one service network (SN1) comprising servers (SE2) offering services,
- at least one intermediate network (IN1) setting up connections between said service network and at least one access network, and
- at least one access network (AN1, AN2) facilitating access to said intermediate network for user equipment (UE).

12. A telecommunication system according to claim 11, wherein at least one of the networks comprises a peripheral unit (BBAN1, BBAN2, BBIN, BBSN) providing information about variable capabilities of at least one device (SE2, INN12, INN11, ANN1, ANN21, ANN22) within the network (AN1, AN2, IN1, SN1) to a unit (DDU) taking a distribution decision.

13. A distribution decision unit (DDU), comprising:
- a processing unit (PU), processing information, co-ordinating the units, and taking a distribution decision,
- a storage (ST), storing capability information, and
- an input/output unit (IOU), performing communication with a requesting unit and peripheral units of said telecommunication system.

14. A computer program stored on a computer readable medium or in a computer memory, controlling a telecommunication system entity by using a method according to any of the claims 1 to 9.
